# FASCICULE DE BREVET EUROPEEN

(11) **EP 3 976 844 B1**
(45) Date de publication et mention de la délivrance du brevet: **12.07.2023**
(21) Numéro de dépôt: 20754315.8
(22) Date de dépôt: 23.04.2020
(51) Int. Cl.: C22C 1/04, C22C 21/00, C22C 45/08

(54) **ALLIAGE A BASE D'ALUMINIUM À TENUE MÉCANIQUE AMÉLIORÉE EN VIEILLISSEMENT A TEMPÉRATURES ÉLEVÉES ET ADAPTE A LA SOLIDIFICATION RAPIDE**
ALUMINIUMBASIERTE LEGIERUNG MIT VERBESSERTER MECHANISCHER FESTIGKEIT BEI HOHEN TEMPERATUREN, ANGEPASST AN SCHNELLE ERSTARRUNG
ALUMINUM-BASED ALLOY HAVING IMPROVED MECHANICAL STRENGTH IN AGEING AT HIGH TEMPERATURES AND ADAPTED TO RAPID SOLIDIFICATION

(30) Priorité: 28.05.2019 FR 1905643
(43) Date de publication de la demande: 06.04.2022
(73) Titulaire: Safran, 75015 Paris (FR)
(72) Inventeur: AUGUSTIN, Rémi, Marie, François, 77550 MOISSY-CRAMAYEL (FR); MENOU, Edern, 77550 MOISSY-CRAMAYEL (FR)
(74) Mandataire: Cabinet Beau de Loménie
(86) Numéro de dépôt international: PCT/FR2020/050697
(87) Numéro de publication internationale: WO 2020/240105

(56) Documents cités:
- EP-A1- 0 606 572
- EP-A1- 0 821 072
- EP-A1- 0 866 143
- US-A1- 2018 015 545
- JAE HOON CHOI ET AL: "CONSOLIDATION BEHAVIOR OF NANOCRYSTALLINE AL-5AT.%TI ALLOYS SYNTHESIZED BY CRYOGENIC MILLING", JOURNAL OF ALLOYS AND COMPOUNDS, ELSEVIER SEQUOIA, LAUSANNE, CH, vol. 315, no. 1/02, 9 février 2001 (2001-02-09), pages 178-186, XP001156279, ISSN: 0925-8388, DOI: 10.1016/S0925-8388(00)01213-5

## Description

### Domaine Technique

La présente invention se rapporte au domaine général des alliages légers pour les turbomachines, et plus particulièrement les alliages à base d'aluminium.

### Technique antérieure

Les équipements des turbomachines en alliages légers à base d'aluminium, et plus particulièrement les turbomachines pour aéronef, sont soumis à des températures de plus en plus élevées (typiquement entre 200°C et 300°C) sous sollicitations mécaniques de fatigue.

Cela est par exemple typiquement le cas pour les carters d'huile, la température de l'huile tendant à augmenter dans les dernières générations de turbomachines, ou bien pour les aubes du redresseur secondaire (également appelé OGV, pour « Outlet Guide Vane » selon la terminologie anglo-saxonne).

Les exigences de durée de vie pour les équipements de turbomachines augmentent, particulièrement pour les turbomachines d'aéronef pour lesquels les durées de vie doivent être supérieures à 90000 heures de vol.

Or, les alliages à base d'aluminium utilisés actuellement ne permettent pas d'obtenir des caractéristiques mécaniques élevées après vieillissement à des températures comprises entre 200°C et 300°C.

En effet, à de telles températures, les alliages connus subissent en général un abattement conséquent, c'est à dire une forte réduction, de leurs caractéristiques mécaniques après 10000 heures de fonctionnement.

Un abattement des caractéristiques mécaniques des alliages à base d'aluminium entraine un surdimensionnement des pièces afin de respecter la contrainte de durée de vie des équipements.

L'abattement des caractéristiques mécaniques des alliages actuels est lié à l'instabilité de la microstructure de l'alliage.

Une telle instabilité de la microstructure de l'alliage se traduit en particulier par le grossissement de la taille des précipités obtenus à l'issu des traitements thermiques réalisés pour la fabrication du matériau.

En effet, dans les alliages à base d'aluminium classiques, des précipités, ou phases, apparaissent après mise en solution de l'alliage, trempe et revenu.

Ces précipités, durcissent la matrice de l'alliage en fonction des durées et des températures des traitements thermiques réalisés, le temps et la température influant directement sur la taille de ces précipités.

Les alliages connus possèdent des précipités qui croissent trop rapidement lors d'un vieillissement avec une température comprise entre 200°C et 300°C, provoquant un abattement des caractéristiques mécaniques de ces alliages.

US-A 2018 015 545 divulgue un alliage à base d'aluminium pour la production des pièces de machines par extrusion définit par la formule AI-Z, dans laquelle Z est maximum 3.5 % en poids, et comprend au moins un élément séléctionné parmi, Si, Sc, Ti, Mn, Fe, Cr, V, Ni, Zr, Ce, Cu, Y, Mo, Nd, Er, Yb, Ta et W.

### Exposé de l'invention

La présente invention a donc pour but principal de pallier de tels inconvénients en proposant un alliage à base d'aluminium comprenant en pourcentages massiques :
- 3 à 6% de titane,
- 1,5 à 3% de manganèse,
- 1 à 2% de fer,
- 1 à 2% de chrome,
- 0,5 à 1,5% de vanadium,
- 0,5 à 1,5% de nickel,
- 0,2 à 1 % de zirconium,
- 0 à 0,5% de cérium,
- 0 à 0,5% de lanthane,
le complément étant constitué d'aluminium et des impuretés inévitables.

On définit par alliage à base d'aluminium un alliage dont le pourcentage massique en aluminium est majoritaire.

On définit les impuretés inévitables comme les éléments qui ne sont pas ajoutés de manière intentionnelle dans la composition et qui sont apportés avec d'autres éléments. Parmi les impuretés inévitables, on peut notamment citer le silicium (Si) et le carbone (C).

L'alliage selon l'invention possède une meilleure tenue à la fatigue sous des températures comprises entre 200°C et 300 °C.

Notamment, l'alliage selon l'invention possède une taille des grains qui est plus stable grâce à un mécanisme de blocage des joints de grains.

Ce mécanisme de blocage des joints de grains est notamment obtenu par des phases quasi-cristallines (QC).

L'alliage selon l'invention est adapté pour un procédé de fabrication avec une vitesse de solidification très élevée. Cet alliage permet notamment de générer, lors d'une solidification rapide, des phases quasi-cristallines (QC) et permet la mise en solution solide dans la matrice d'éléments permettant un renforcement de l'alliage.

Cet alliage léger à base d'aluminium est destiné à la fabrication d'équipements de turbomachines, tels que des carters d'huile ou des aubes de redresseur de compresseur basse pression (OGV).

Cet alliage léger à base d'aluminium peut également être utilisé pour fabriquer des pièces structurales pour des aéronefs autres que des pièces de turbomachine, comme par exemple pour fabriquer des éléments de trains d'atterrissage.

L'alliage peut comprendre, en pourcentages massiques, 4 à 6% de titane.

L'alliage peut comprendre, en pourcentages massiques, 2,1 à 2,6% de manganèse.

L'alliage peut comprendre, en pourcentages massiques, en pourcentages massiques, 1,3 à 1,7% de chrome.

L'alliage peut comprendre, en pourcentages massiques, 1,2 à 1,6% de fer.

L'alliage peut comprendre, en pourcentages massiques, 0,75 à 1,15% de vanadium.

L'alliage peut comprendre, en pourcentages massiques, 0,8 à 1,1% de nickel.

L'alliage peut comprendre, en pourcentages massiques, 0,45 à 0,75% de zirconium.

L'alliage peut comprendre, en pourcentages massiques, 0,05 à 0,35% de cérium.

L'alliage peut comprendre, en pourcentages massiques, 0 à 0,2% de lanthane.

L'alliage peut comprendre, en pourcentages massiques, 5,00% de titane, 2,34% de manganèse, 1,40% de fer, 1,50% de chrome, 0,95% de vanadium, 0,95% de nickel, 0,60% de zirconium, 0,20% de cérium, 0,10% de lanthane, le complément étant constitué d'aluminium et des impuretés inévitables.

Selon un aspect additionnel, l'invention concerne une pièce d'une turbomachine en un alliage à base d'aluminium selon l'une quelconque des caractéristiques précédentes, ladite pièce étant de préférence une pièce structurale de la turbomachine. Par pièce structurale on étend ici une pièce qui supporte des charges mécaniques. Les charges mécaniques peuvent être des charges statiques, comme cela est par exemple le cas pour ces pièces de liaison mécanique de la turbomachine, comme par exemple des entretoises des aubes fixes de guidage de sortie de soufflante (ou OGV). Les charges peuvent également être des efforts dynamiques, comme cela peut par exemple être le cas d'éléments tournant de la turbomachine qui doivent supporter des efforts centrifuges. La pièce peut également être une pièce qui n'est pas structurale.

Selon un autre aspect, l'invention concerne un procédé de fabrication d'une pièce d'une turbomachine en alliage à base d'aluminium selon l'une quelconque des caractéristiques précédentes, comprenant une étape de solidification de l'alliage dans laquelle l'alliage passe de l'état liquide à l'état solide avec une vitesse de refroidissement supérieure ou égale à 10⁵ °C/s.

Selon une caractéristique additionnelle, la pièce est réalisée par fabrication additive par fusion laser d'une poudre de l'alliage.

Selon une caractéristique supplémentaire, le procédé comprend les étapes suivantes :
- fabrication d'une poudre à partir de l'alliage obtenu après l'étape de solidification ;
- frittage de la poudre ainsi fabriquée pour obtenir la pièce.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement les étapes d'un procédé de fabrication d'une pièce de turbomachine selon l'invention.
[Fig. 2] La figure 2 représente schématiquement les étapes d'une variante du procédé de fabrication dans laquelle la pièce est obtenue par frittage.
[Fig. 3] La figure 3 représente schématiquement les étapes d'une variante du procédé de fabrication dans laquelle la pièce est obtenue par fabrication additive par fusion d'une poudre d'alliage avec un laser.

### Description des modes de réalisation

L'alliage selon l'invention comprend une base d'aluminium et de titane, à laquelle sont associés six métaux de transition que sont le fer, le chrome, le vanadium, le nickel, le zirconium, et le manganèse.

De plus, l'alliage peut comprendre une terre rare telle que du cérium et/ou du lanthane.

L'alliage comprend 3 à 6% de titane, 1,5 à 3% de manganèse, 1 à 2% de fer, 1 à 2% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des éventuelles impuretés, comme par exemple le silicium.

Une telle composition d'alliage permet d'assurer une meilleure tenue au vieillissement à des températures comprises entre 200°C et 300°C.

En outre, une telle composition d'alliage est adaptée pour une fabrication avec une solidification très rapide. Par solidification très rapide on comprend ici un passage de l'état liquide à l'état solide de l'alliage avec une vitesse de refroidissement supérieure ou égale à 10⁵ °C/s.

La composition de l'alliage est en effet adaptée pour générer des phases quasi-cristallines (QC) de tailles nanométriques lors de la solidification de l'alliage avec une vitesse de refroidissement supérieure ou égale à 10⁵ °C/s. Ces phases quasi-cristallines (QC) nanométriques ne peuvent apparaître que lors d'une solidification avec une vitesse de refroidissement supérieure ou égale à 10⁵ °C/s. La vitesse de formation des phases quasi-cristallines (QC) est liée directement à la vitesse de solidification, les phases QC étant conservées par trempe rapide depuis l'état liquide par le phénomène de surfusion (*«undercooling effect* » selon la terminologie anglo-saxonne).

En outre, la composition de l'alliage est adaptée pour assurer une mise en solution solide dans la matrice d'éléments, comme le titane, le nickel et le vanadium, permettant ainsi de renforcer l'alliage.

L'alliage comprend une résistance à la traction (Ultimate Tensile Strength) supérieure ou égale à 600MPa à 20°C, et un abattement des caractéristiques mécaniques inférieur à celui des alliages à base d'aluminium conventionnels à 250°C.

La stabilité des caractéristiques mécaniques de l'alliage est obtenue en stabilisant la taille des grains avec un mécanisme de blocage des joints de grains, et en formant des précipités dispersoïdes plus fins et plus stables en températures. Les phases quasi-cristallines (QC) générés lors de la solidification permettent d'assurer les deux fonctions, c'est-à-dire le blocage des joints de grains et la formation de précipités dans la matrice.

Le ratio, en pourcentage atomique: Mn(%)/Fe(%) compris entre 1 et 1,7 favorise la génération des phases QC. Lorsque le ratio est proche de 1, une phase Icosaédrique eutectique est formée, tandis que lorsque le ratio est proche de 1,7, une phase I-Phase ou D-Phase est formée.

De plus, le chrome permet de stabiliser les phases QC. Il stabilise également les phases Al₃Ti, permettant ainsi d'améliorer la tenue au vieillissement en température. En outre, l'association de vanadium et de zirconium permet de stabiliser les phases Icosaédriques présentent dans l'alliage, permettant ainsi d'améliorer la tenue au vieillissement en température.

De plus, le cérium et le lanthane permettent une modification et un affinement des phases apparaissant lors de la fusion de l'alliage, favorisant une précipitation fine et dispersée lors d'une solidification rapide. Le lanthane permet de modifier les phases intermétalliques AI(Fe, Ni) pour affiner la structure et conduire à une dispersion optimale des précipités lors de la solidification. Le cérium favorise la formation de phases QC. Le lanthane et le cérium peuvent être ajoutés à l'alliage par ajout de mischmétal, ou bien être ajoutés indépendamment.

L'alliage peut comprendre de manière avantageuse, en pourcentages massiques, 4 à 6% de titane, 1,5 à 3% de manganèse, 1 à 2% de fer, 1 à 2% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 3 à 6% de titane, 2,1 à 2,6% de manganèse, 1 à 2% de fer, 1 à 2% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1 à 2% de fer, 1 à 2% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 3 à 6% de titane, 1,5 à 3% de manganèse, 1 à 2% de fer, 1,3 à 1,7% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 1,5 à 3% de manganèse, 1 à 2% de fer, 1,3 à 1,7% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1 à 2% de fer, 1,3 à 1,7% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 3 à 6% de titane, 1,5 à 3% de manganèse, 1,2 à 1,6% de fer, 1 à 2% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 1,5 à 3% de manganèse, 1,2 à 1,6% de fer, 1 à 2% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1 à 2% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,5 à 1,5% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 3 à 6% de titane, 1,5 à 3% de manganèse, 1 à 2% de fer, 1 à 2% de chrome, 0,75 à 1,15% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 1,5 à 3% de manganèse, 1 à 2% de fer, 1 à 2% de chrome, 0,75 à 1,15% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1 à 2% de fer, 1 à 2% de chrome, 0,75 à 1,15% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1 à 2% de chrome, 0,75 à 1,15% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,5 à 1,5% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 3 à 6% de titane, 1,5 à 3% de manganèse, 1 à 2% de fer, 1 à 2% de chrome, 0,5 à 1,5% de vanadium, 0,8 à 1,1% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 1,5 à 3% de manganèse, 1 à 2% de fer, 1 à 2% de chrome, 0,5 à 1,5% de vanadium, 0,8 à 1,1% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1 à 2% de fer, 1 à 2% de chrome, 0,5 à 1,5% de vanadium, 0,8 à 1,1% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1 à 2% de chrome, 0,5 à 1,5% de vanadium, 0,8 à 1,1% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,5 à 1,5% de vanadium, 0,8 à 1,1% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,8 à 1,1% de nickel, 0,2 à 1% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 3 à 6% de titane, 1,5 à 3% de manganèse, 1 à 2% de fer, 1 à 2% de chrome, 0,5 à 1,5% de vanadium, 0,5 à 1,5% de nickel, 0,45 à 0,75% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 1,5 à 3% de manganèse, 1 à 2% de fer, 1 à 2% de chrome, 0,5 à 1,5% de vanadium, 0,5 à 1,5% de nickel, 0,45 à 0,75% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1 à 2% de fer, 1 à 2% de chrome, 0,5 à 1,5% de vanadium, 0,5 à 1,5% de nickel, 0,45 à 0,75% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1 à 2% de chrome, 0,5 à 1,5% de vanadium, 0,5 à 1,5% de nickel, 0,45 à 0,75% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,5 à 1,5% de vanadium, 0,5 à 1,5% de nickel, 0,45 à 0,75% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,5 à 1,5% de nickel, 0,45 à 0,75% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,8 à 1,1% de nickel, 0,45 à 0,75% de zirconium, 0 à 0,5% de cérium, 0 à 0,5% de lanthane, le complément étant constitué d'aluminium et des impuretés inévitables.

L'alliage peut comprendre de manière avantageuse, en pourcentages massiques, 3 à 6% de titane, 1,5 à 3% de manganèse, 1 à 2% de fer, 1 à 2% de chrome, 0,5 à 1,5% de vanadium, 0,5 à 1,5% de nickel, 0,2 à 1% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 4 à 6% de titane, 1,5 à 3% de manganèse, 1 à 2% de fer, 1 à 2% de chrome, 0,5 à 1,5% de vanadium, 0,5 à 1,5% de nickel, 0,2 à 1% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1 à 2% de fer, 1 à 2% de chrome, 0,5 à 1,5% de vanadium, 0,5 à 1,5% de nickel, 0,2 à 1% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1 à 2% de chrome, 0,5 à 1,5% de vanadium, 0,5 à 1,5% de nickel, 0,2 à 1% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,5 à 1,5% de vanadium, 0,5 à 1,5% de nickel, 0,2 à 1% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,5 à 1,5% de nickel, 0,2 à 1% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,8 à 1,1% de nickel, 0,2 à 1% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,8 à 1,1% de nickel, 0,45 à 0,75% de zirconium, 0,05 à 0,35% de cérium, 0 à 0,5% de lanthane, le complément étant constitué d'aluminium et des impuretés inévitables.

L'alliage peut comprendre de manière avantageuse, en pourcentages massiques, 3 à 6% de titane, 1,5 à 3% de manganèse, 1 à 2% de fer, 1 à 2% de chrome, 0,5 à 1,5% de vanadium, 0,5 à 1,5% de nickel, 0,2 à 1% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 1,5 à 3% de manganèse, 1 à 2% de fer, 1 à 2% de chrome, 0,5 à 1,5% de vanadium, 0,5 à 1,5% de nickel, 0,2 à 1% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1 à 2% de fer, 1 à 2% de chrome, 0,5 à 1,5% de vanadium, 0,5 à 1,5% de nickel, 0,2 à 1% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1 à 2% de chrome, 0,5 à 1,5% de vanadium, 0,5 à 1,5% de nickel, 0,2 à 1% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,5 à 1,5% de vanadium, 0,5 à 1,5% de nickel, 0,2 à 1% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,5 à 1,5% de nickel, 0,2 à 1% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,8 à 1,1% de nickel, 0,2 à 1% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,8 à 1,1% de nickel, 0,45 à 0,75% de zirconium, 0 à 0,5% de cérium, 0 à 0,2% de lanthane, le complément étant constitué d'aluminium et des impuretés inévitables.

L'alliage peut comprendre de manière avantageuse, en pourcentages massiques, 4 à 6% de titane, 2,1 à 2,6% de manganèse, 1,2 à 1,6% de fer, 1,3 à 1,7% de chrome, 0,75 à 1,15% de vanadium, 0,8 à 1,1% de nickel, 0,45 à 0,75% de zirconium, 0,05 à 0,35% de cérium, 0 à 0,2% de lanthane, le complément étant constitué d'aluminium et des impuretés inévitables.

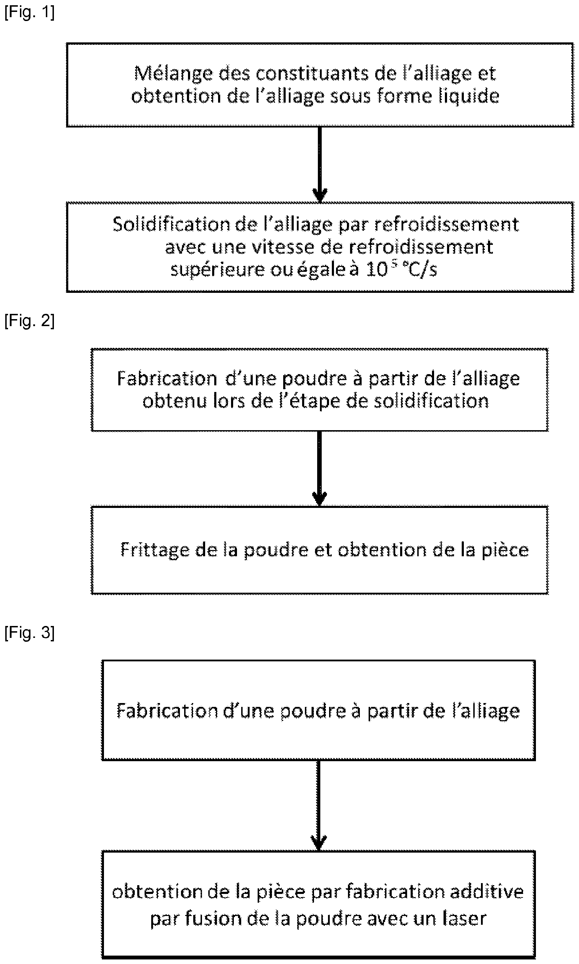

Selon une variante avantageuse, l'alliage comprend, en pourcentages massiques, 5,00% de titane, 2,34% de manganèse, 1,40% de fer, 1,50% de chrome, 0,95% de vanadium, 0,95% de nickel, 0,60% de zirconium, 0,20% de cérium, 0,10% de lanthane, le complément étant constitué d'aluminium et des impuretés inévitables. Ainsi, comme illustré à la figure 1, le procédé de fabrication d'une pièce en alliage comprend les étapes suivantes :
- Mélange des constituants de l'alliage et obtention de l'alliage sous forme liquide. Dans cette étape les différents constituants l'alliage, l'aluminium, le titane, le manganèse, le fer, le chrome, le vanadium, le nickel, le zirconium, le cérium et le lanthane, sont mélangés en phase liquide. Un tel mélange permet l'obtention de l'alliage, ledit alliage étant encore en phase liquide.
- Solidification de l'alliage par refroidissement avec une vitesse de refroidissement supérieure ou égale comprise à 10⁵ °C/s. En effet, une vitesse de refroidissement supérieure à 10⁵ °C/s permet d'obtenir les précipités désirés, c'est-à-dire de faible taille et stables dans le temps lors d'une exposition à une température comprise entre 200°C et 300°C. Le refroidissement de l'alliage pour sa solidification peut par exemple être effectué par trempe sur roue (ou *« melt spinning »* selon la terminologie anglo-saxonne), par atomisation sous forme de fines gouttelettes refroidies sous gaz neutre, ou par tout autre procédé permettant d'obtenir une telle vitesse de refroidissement. Une fois solidifié, l'alliage peut être broyé afin de former une poudre avec des grains du diamètre souhaité.

Après l'étape de solidification, l'alliage possède les propriétés de résistance aux contraintes mécaniques lors d'une exposition en température, il n'est donc pas nécessaire de réaliser un traitement thermique une fois l'alliage solidifié. Cependant, un traitement thermique peut être réalisé, notamment lors de la mise en forme de la pièce en alliage.

Une fois solidifié, l'alliage peut être mis en forme selon plusieurs solutions possibles. Par exemple, comme cela est illustré sur la figure 2, le procédé de fabrication peut comprendre les étapes suivantes :
- Fabrication d'une poudre à partir de l'alliage obtenu lors de l'étape de solidification.
- Frittage de la poudre et obtention de la pièce. Pour ce faire, la poudre est mise dans un moule afin de lui donner la forme de la pièce à fabriquer, et est compactée. Le compactage peut être réalisé à chaud ou à froid, et sous vide, ou sous atmosphère contrôlé. Enfin, si le compactage a été réalisé à froid, la poudre dans le moule est chauffée afin de faire diffuser la poudre de l'alliage et donner sa cohérence à la pièce. Le frittage peut également être un frittage flash (ou SPS, pour *«Spark Plasma Sintering »*, selon la terminologie anglo-saxonne).

Cependant, d'autres méthodes de fabrication sont possibles. La pièce peut par exemple être mise en forme par forgeage, pour laminage à froid ou laminage à chaud, par extrusion, ou par mise en forme par formage superplastique (ou SPF, pour « *Super plastic forming »*, selon la terminologie anglo-saxonne).

Par ailleurs, la pièce en alliage selon l'invention peut être réalisée par fabrication additive, ou impression tridimensionnelle (3D), dans laquelle de la poudre d'alliage est fondue par un laser. En effet, la Demanderesse s'est aperçu que la solidification de la goutte d'alliage fondue par le laser permet de donner à l'alliage ses propriétés de vieillissement en température.

La figure 3 illustre la variante selon laquelle la pièce est fabriquée par fabrication additive dans laquelle la poudre d'alliage est fondue par laser (LBM, pour *« Laser Beam Melting* » selon la terminologie anglo-saxonne). La poudre d'alliage utilisée pour la fabrication additive peut par exemple être réalisée par atomisation.

Le substrat sur lequel la pièce est fabriquée, ainsi que la portion de la pièce déjà réalisée permettent d'absorber très rapidement la chaleur au vu de la faible quantité d'alliage fondu avec le laser. La goutte d'alliage fondue avec le laser se solidifie avec une vitesse de refroidissement supérieure ou égale à 10⁵ °C/s.

Ainsi, lorsque la pièce est fabriquée par fabrication additive, il n'est pas nécessaire que la poudre d'alliage utilisée ait déjà été solidifiée avec une vitesse de refroidissement supérieure ou égale à 10⁵ °C/s, ce qui simplifie la fabrication de la poudre utilisée pour la fabrication additive. L'utilisation de la fabrication additive avec cet alliage apporte ainsi un double avantage, d'une part des pièces avec une forme très complexe peuvent être fabriquées, et d'autre part le procédé de fabrication est simplifié car l'étape de solidification est réalisée par la fabrication de la pièce avec le laser.

## Revendications

1. Alliage à base d'aluminium comprenant en pourcentages massiques :
- 3 à 6% de titane,
- 1,5 à 3% de manganèse,
- 1 à 2% de fer,
- 1 à 2% de chrome,
- 0,5 à 1,5% de vanadium,
- 0,5 à 1,5% de nickel,
- 0,2 à 1% de zirconium,
- 0 à 0,5% de cérium,
- 0 à 0,5% de lanthane,
le complément étant constitué d'aluminium et des impuretés inévitables.

2. Alliage selon la revendication 1 comprenant, en pourcentages massiques, 4 à 6% de titane.

3. Alliage selon l'une quelconque des revendications 1 à 2 comprenant, en pourcentages massiques, 2,1 à 2,6% de manganèse.

4. Alliage selon l'une quelconque des revendications 1 à 3 comprenant, en pourcentages massiques, 1,3 à 1,7% de chrome.

5. Alliage selon l'une quelconque des revendications 1 à 4 comprenant, en pourcentages massiques, 1,2 à 1,6% de fer.

6. Alliage selon l'une quelconque des revendications 1 à 5 comprenant, en pourcentages massiques, 0,75 à 1,15% de vanadium.

7. Alliage selon l'une quelconque des revendications 1 à 6 comprenant, en pourcentages massiques, 0,8 à 1,1% de nickel.

8. Alliage selon l'une quelconque des revendications 1 à 7 comprenant, en pourcentages massiques, 0,45 à 0,75% de zirconium.

9. Alliage selon l'une quelconque des revendications 1 à 8 comprenant, en pourcentages massiques, 0,05 à 0,35% de cérium.

10. Alliage selon l'une quelconque des revendications 1 à 9 comprenant, en pourcentages massiques, 0 à 0,2% de lanthane.

11. Alliage selon l'une quelconque des revendications 1 à 10, comprenant, en pourcentages massiques :
- 5,00% de titane,
- 2,34% de manganèse,
- 1,40% de fer,
- 1,50% de chrome,
- 0,95% de vanadium,
- 0,95% de nickel,
- 0,60% de zirconium,
- 0,20% de cérium,
- 0,10% de lanthane,
le complément étant constitué d'aluminium et des impuretés inévitables.

12. Pièce d'une turbomachine en un alliage à base d'aluminium selon l'une quelconque des revendications 1 à 11.

13. Procédé de fabrication d'une pièce d'une turbomachine en alliage à base d'aluminium selon l'une quelconque des revendications 1 à 11, comprenant une étape de solidification de l'alliage dans laquelle l'alliage passe de l'état liquide à l'état solide avec une vitesse de refroidissement supérieure ou égale à 10⁵ °C/s.

14. Procédé selon la revendication 13, dans lequel la pièce est réalisée par fabrication additive par fusion laser d'une poudre de l'alliage.

15. Procédé selon la revendication 13, comprenant les étapes suivantes :
- fabrication d'une poudre à partir de l'alliage obtenu à l'étape de solidification ;
- frittage de la poudre ainsi fabriquée pour obtenir la pièce.

## Patentansprüche

1. Aluminiumbasierte Legierung, die in Massenprozent Folgendes umfasst:
- 3 bis 6 % Titan,
- 1,5 bis 3 % Mangan,
- 1 bis 2 % Eisen,
- 1 bis 2 % Chrom,
- 0,5 bis 1,5 % Vanadium,
- 0,5 bis 1,5 % Nickel,
- 0,2 bis 1 % Zirkon,
- 0 bis 0,5 % Cerium,
- 0 bis 0,5 % Lanthan,
wobei der Rest aus Aluminium und unvermeidlichen Verunreinigungen besteht.

2. Legierung nach Anspruch 1, die in Massenprozent 4 bis 6 % Titan umfasst.

3. Legierung nach einem der Ansprüche 1 bis 2, die in Massenprozent 2,1 bis 2,6 % Mangan umfasst.

4. Legierung nach einem der Ansprüche 1 bis 3, die in Massenprozent 1,3 bis 1,7 % Chrom umfasst.

5. Legierung nach einem der Ansprüche 1 bis 4, die in Massenprozent 1,2 bis 1,6 % Eisen umfasst.

6. Legierung nach einem der Ansprüche 1 bis 5, die in Massenprozent 0,75 bis 1,15 % Vanadium umfasst.

7. Legierung nach einem der Ansprüche 1 bis 6, die in Massenprozent 0,8 bis 1,1 % Nickel umfasst.

8. Legierung nach einem der Ansprüche 1 bis 7, die in Massenprozent 0,45 bis 0,75 % Zirkon umfasst.

9. Legierung nach einem der Ansprüche 1 bis 8, die in Massenprozent 0,05 bis 0,35 % Cerium umfasst.

10. Legierung nach einem der Ansprüche 1 bis 9, die in Massenprozent 0 bis 0,2 % Lanthan umfasst.

11. Legierung nach einem der Ansprüche 1 bis 10, die in Massenprozent Folgendes umfasst:
- 5,00 % Titan,
- 2,34 % Mangan,
- 1,40 % Eisen,
- 1,50 % Chrom,
- 0,95 % Vanadium,
- 0,95 % Nickel,
- 0,60 % Zirkon,
- 0,20 % Cerium,
- 0,10 % Lanthan,
wobei der Rest aus Aluminium und unvermeidlichen Verunreinigungen besteht.

12. Turbinentriebwerksteil aus einer aluminiumbasierten Legierung nach einem der Ansprüche 1 bis 11.

13. Verfahren zur Herstellung eines Turbinentriebwerksteils aus einer aluminiumbasierten Legierung nach einem der Ansprüche 1 bis 11, das einen Schritt des Erstarrens der Legierung umfasst, bei dem die Legierung mit einer Abkühlungsgeschwindigkeit von größer oder gleich 10⁵ °C/s vom flüssigen Zustand in den festen Zustand übergeht.

14. Verfahren nach Anspruch 13, wobei das Teil durch additive Fertigung durch Laserschmelzen eines Pulvers aus der Legierung hergestellt wird.

15. Verfahren nach Anspruch 13, das die folgenden Schritte umfasst:
- Herstellen eines Pulvers ausgehend von der im Erstarrungsschritt erhaltenen Legierung;
- Sintern des so hergestellten Pulvers, um das Teil zu erhalten.

## Claims

1. An aluminum alloy comprising, in mass percentages:
- 3 to 6% titanium,
- 1.5 to 3% manganese
- 1 to 2% iron,
- 1 to 2% chromium,
- 0.5 to 1.5% vanadium,
- 0.5 to 1.5% nickel,
- 0.2 to 1% zirconium,
- 0 to 0.5% cerium,
- 0 to 0.5% lanthanum,
the remainder consisting of aluminum and unavoidable impurities.

2. The alloy as claimed in claim 1 comprising, in mass percentages, 4 to 6% titanium.

3. The alloy as claimed in any one of claims 1 to 2 comprising, in mass percentages, 2.1 to 2.6% manganese.

4. The alloy as claimed in any one of claims 1 to 3 comprising, in mass percentages, 1.3 to 1.7% chromium.

5. The alloy as claimed in any one of claims 1 to 4 comprising, in mass percentages, 1.2 to 1.6% iron.

6. The alloy as claimed in any one of claims 1 to 5 comprising, in mass percentages, 0.75 to 1.15% vanadium.

7. The alloy as claimed in any one of claims 1 to 6 comprising, in mass percentages, 0.8 to 1.1% nickel.

8. The alloy as claimed in any one of claims 1 to 7 comprising, in mass percentages, 0.45 to 0.75% zirconium.

9. The alloy as claimed in any one of claims 1 to 8 comprising, in mass percentages, 0.05 to 0.35% cerium.

10. The alloy as claimed in any one of claims 1 to 9 comprising, in mass percentages, 0 to 0.2% lanthanum.

11. The alloy as claimed in any one of claims 1 to 10, comprising, in mass percentages:
- 5.00% titanium,
- 2.34% manganese,
- 1.40% iron,
- 1.50% chromium,
- 0.95% vanadium,
- 0.95% nickel,
- 0.60% zirconium,
- 0.20% cerium,
- 0.10% lanthanum,
the remainder consisting of aluminum and unavoidable impurities.

12. A turbomachine part made of an aluminum alloy as claimed in any one of claims 1 to 11.

13. A process for manufacturing a turbomachine part made of an aluminum alloy as claimed in any one of claims 1 to 11, comprising a step of solidifying the alloy in which the alloy passes from the liquid state to the solid state with a cooling rate greater than or equal to 10⁵ °C/s.

14. The process as claimed in claim 13, wherein the part is made by additive manufacturing by laser melting a powder of the alloy.

15. The process as claimed in claim 13, comprising the following steps:
- manufacturing a powder from the alloy obtained in the solidification step;
- sintering the powder thus produced to obtain the part.
